# EUROPEAN PATENT SPECIFICATION

(11) **EP 2 827 969 B1**
(45) Date of publication and mention of the grant of the patent: **06.12.2017**
(21) Application number: 12743275.5
(22) Date of filing: 11.07.2012
(51) Int. Cl.: B01D 53/06, A23B 7/148

(54) **ROTATING REGENERATIVE SCRUBBER AND SEALING ARRANGEMENT**
ROTIERENDE REGENERATIVE BÜRSTEN- UND DICHTUNGSANORDNUNG
LAVEUR RÉGÉNÉRATIF ROTATIF ET AGENCEMENT FORMANT UNE ÉTANCHÉITÉ

(30) Priority: 23.03.2012 US 201261614767 P
(43) Date of publication of application: 28.01.2015
(73) Proprietor: Carrier Corporation, Farmington, CT 06034 (US)
(72) Inventor: POSTGATE, Farley W., Syracuse, New York 13221 (US)
(74) Representative: Schmitt-Nilson Schraud Waibel Wohlfrom Patentanwälte Partnerschaft mbB
(86) International application number: PCT/US2012/046138
(87) International publication number: WO 2013/141891

(56) References cited:
- US-A- 2 981 521
- US-A- 3 685 231
- US-A- 5 878 590
- US-A1- 2002 071 979
- US-B1- 6 361 585

## Description

### Background

This disclosure relates generally to minimizing leakage between two gas flows passing through a rotating regenerative device and, more particularly, to a sealing arrangement for minimizing leakage between two gas flows passing through a rotating regenerative scrubber.

Perishable goods are commonly transported in a controlled environment within an enclosed space such as a cargo box of a truck, trailer, sea container, or intermodal container. Certain perishable produce, such as fresh fruits, vegetables and flowers, produce carbon dioxide as a product of the respiration process. In a closed environment, due to post harvest respiration, the carbon dioxide concentration rises and the oxygen concentration drops in the atmosphere within the closed environment. If the oxygen concentration gets too low or the carbon dioxide concentration gets too high, the produce can spoil. Additionally, certain fruits and vegetables and flowers release ethylene and/or ethylene compounds as a byproduct of the ripening process. The presence of ethylene based gases within the enclosed space of the cargo box is known to accelerate the ripening process.

It is known to remove carbon dioxide from the atmosphere within an enclosed space by passing the gas from within the enclosed space through a non-regenerative bed of carbon dioxide adsorbent to scrub carbon dioxide from the gas passing through the adsorbent bed. However non-regenerative systems lose scrubbing efficiency as the adsorbent bed becomes saturated and the carbon dioxide adsorbent material must be replaced. Therefore, such non-regenerative systems have limited application, particularly in the long haul transport of perishable produce.

US 2002/071979 A1 discloses a species transfer device in communication with at least two streams, the transfer device comprising a housing assembly, an exchange matric and optionally, a sorbent. In the housing assembly, an exchange media is contained inside the hosing enclosure and between a sealing system. The sealing system provides a diametrical seal between two flow paths and comprises a contact seal. The contact seal is made of a low friction material, and is in direct contact with the end of a media wheel and is maintained there by constant pressure exerted by an arrangement of springs acting between the housing end and the seal plate.

US 6 361 585 A discloses a rotor-type dehumidifier having disc members with a plurlaity of fan-shaped openings which are affixed to ciruclar end surfaces of the rotor. Additionally, substantially rectangular plates are provided having a three-ply construction, comprising a flexible outer member, an inner member made of a low-friction material, and an intermediate layer made of a flexible material.

### Summary

According to the present invention, a sealing arrangement having the features according to claim 1, a seal gasket having the features according to claim 2, and rotary regenerative scrubber having the features according to claim 3 are provided. Preferred embodiments of the invention are defined in the respective dependent claims. In the following description, any information falling outside the scope of the claims is for information only.

In an aspect, a rotary regenerative scrubber is provided for removing a selected gaseous component from a flow of gas to be cleaned. The rotary regenerative the scrubber includes a housing defining a first flow passage for a flow of gas to be cleaned and a second flow passage for a flow of regenerating gas, a rotor assembly disposed in the housing for rotation through the first flow passage and the second flow passage, a first seal gasket disposed between a first seal seat of the housing facing a first end of the rotor assembly and the first end of the rotor assembly, and a second seal gasket disposed between a second seal seat of the housing facing a second end of the rotor assembly and the second end of the rotor assembly.
The rotor assembly includes a rotor that carries a regenerative absorbent material capable of absorbing the selected gaseous component. In an embodiment, the housing includes a first housing section and a second housing section, the first housing section defining a first gas manifold section and the second housing section defining a second gas manifold section, the first seal seat disposed across the first gas manifold and the second seal seat disposed across the second gas manifold. In an embodiment, the rotor has a central hub, a circumferential wall, and a plurality of radially directed partitions extending from the central hub to the circumferential wall. The rotor is mounted to a shaft for rotation with the shaft.

In an embodiment, the rotary regenerative scrubber includes a rotor filled with a carbon dioxide absorbent material mounted on a shaft for rotation about the axis of the shaft. The rotor is disposed in a housing defining a first flow passage through which is passed a flow of air from a cargo box of a refrigerated transport container to be cleaned of at least a portion of carbon dioxide contained in therein and a second flow passage through which a flow of fresh air is passed, the regenerative gas capable of absorbing carbon dioxide from the carbon dioxide absorbent material. As the rotor rotates, the carbon dioxide absorbent material passes alternately between the flow of cargo box air to be cleaned and the flow of regenerative fresh air, whereby the carbon dioxide adsorbent material is regenerated by removing collected carbon dioxide from the carbon dioxide adsorbent material.

### Brief Description of the Drawings

For a further understanding of the disclosure, reference will be made to the following detailed description which is to be read in connection with the accompanying drawing, wherein:
FIG. 1 is a perspective view of an embodiment of a rotary regenerative scrubber;
FIG. 2 is an exploded perspective view of the embodiment of the rotary regenerative scrubber depicted in FIG. 1;
FIG. 3 is a sectioned elevation view of the rotary regenerative scrubber of FIG. 1;
FIG. 4 is a perspective view of the rotor of the embodiment of the rotary regenerative scrubber as disclose herein;
FIG. 5 is a sectioned elevation view of the rotor of depicted in FIG. 4 taken along line 5-5 of FIG. 4;
FIG. 6 is an exploded perspective view illustrating the assembly of a seal gasket into a first end of the housing of the embodiment of the rotary regenerative scrubber depicted in FIG. 1;
FIG. 7 is an exploded perspective view illustrating the assembly of a seal gasket into a second end of the housing of the embodiment of the rotary regenerative scrubber depicted in FIG. 1;
FIG. 8 is a side elevation view of an embodiment of a seal gasket as installed in the rotary regenerative scrubber disclosed herein; and
FIG. 9 is a plan view illustrating the rotor of the rotary regenerative scrubber passing across a seal gasket.

### Detailed Description

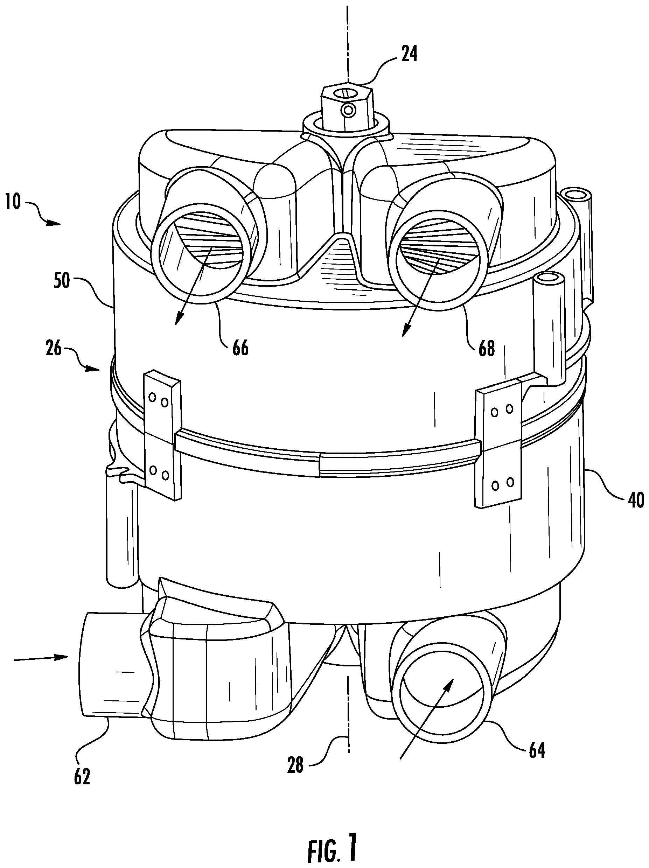

Referring initially to FIGs. 1-3 of the drawing, there is depicted an exemplary embodiment of a rotary regenerative scrubber 10 having a rotor assembly 20 that carries an absorbent material capable of absorbing a selected gaseous component or components from a flow of gas passing through the absorbent material. The rotor assembly 20 includes a rotor 22, also referred to as a carousel, mounted to a shaft 24. The rotor assembly 20 is disposed within a stationary housing 26 for rotation with the shaft 24 about a longitudinal axis 28 of the shaft 24.

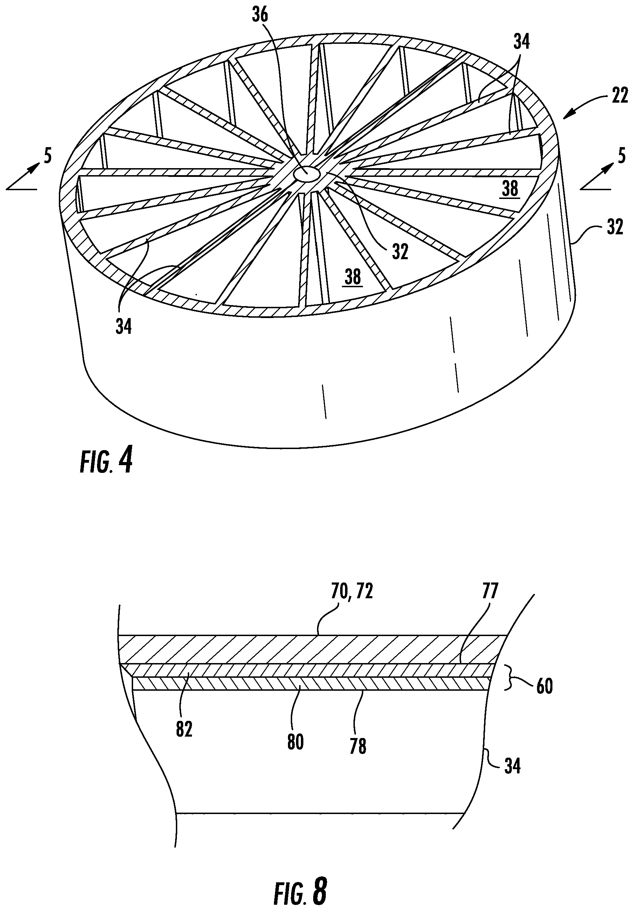

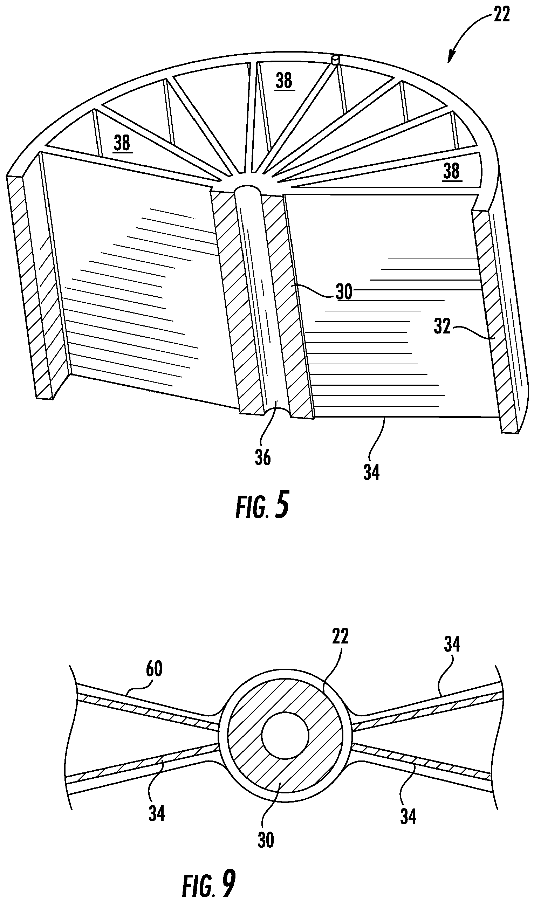

Referring now also to FIGs. 4 and 5, the rotor 22 includes a central hub 30, a circumferential wall 32 and a plurality of radially directed partitions 34 extending from the hub 30 to the circumferential wall 32. The hub 30 has a central hole 36 extending axially therethrough for receiving the shaft 24 to which the rotor 22 is mounted for rotation with the shaft 24. The plurality of partitions 34 divide the volume defined by the rotor 22 into a plurality of wedge-shaped sectors 38. Absorbent material capable of absorbing the selected gas component or components to be removed is disposed in each sector 38.

The housing 26 includes a first housing section 40 and a second housing 50. In the depicted embodiment wherein the rotary regenerative scrubber 10 is shown as vertically orientated, the first housing section 40 forms a lower housing and the second housing section 50 forms an upper housing. It is to be understood, however, that the rotary regenerative scrubber 10 may be orientated for rotation about an axis other than a vertical axis, such as a horizontal axis or otherwise orientated axis, as desired. Each of the first and second housing sections 40, 50 defines a gas manifold section 42, 52 and a chamber wall 44, 54. When the first and second housing sections 40, 50 are assembled in mating relationship as depicted in FIG. 1, the respective chamber walls 44, 54 come together to define a chamber 25 in which the rotor 22 is disposed.

Each of the gas manifold sections 42, 52 include separate first and second plenums, the first plenums 43, 53 for the generative gas and the second plenums 45, 55 for the gas to be cleaned. When the first and second housing sections 40 and 50 are assembled together, the first plenums 43, 53 are in fluid communication via a first gas flow passage through the chamber 25 in which the rotor 22 is disposed. Similarly, the second plenums 45, 55 are in fluid communication via a second gas flow passage through the chamber 25. The first housing section 40 further includes a connector 62 opening in fluid communication with the first plenum 43 and a second connector 64 opening in fluid communication with the second plenum 45. The second housing section 50 further includes a connector 66 opening in fluid communication with the first plenum 53 and a second connector 68 opening in fluid communication with the second plenum 55.

One of the second plenums 45, 55 serves as an inlet plenum for receiving a flow of gas to be cleaned and the other of the second plenums 45, 55 serves as an outlet plenum through which a flow cleaned gas is discharged. One of the first plenums 43, 53 serves as an inlet plenum for receiving a flow of regenerative gas and the other of the first plenums 43, 53 serves as an outlet plenum through which the regenerative gas is discharged. In the embodiment depicted in FIG. 1, the first plenum 43 of the first housing section 40 is an inlet plenum receiving the flow of regenerative gas through connector tube 62, the second plenum 45 of the first housing section 40 is an inlet plenum receiving the flow of gas to be cleaned through connector tube 64, the first plenum 53 of the second housing section 50 is an outlet plenum through which the flow of regenerative gas discharges through the connector 66, and the second plenum 55 of the second lousing section 50 is an outlet plenum through which the flow of the cleaned gas discharges through connector 68.

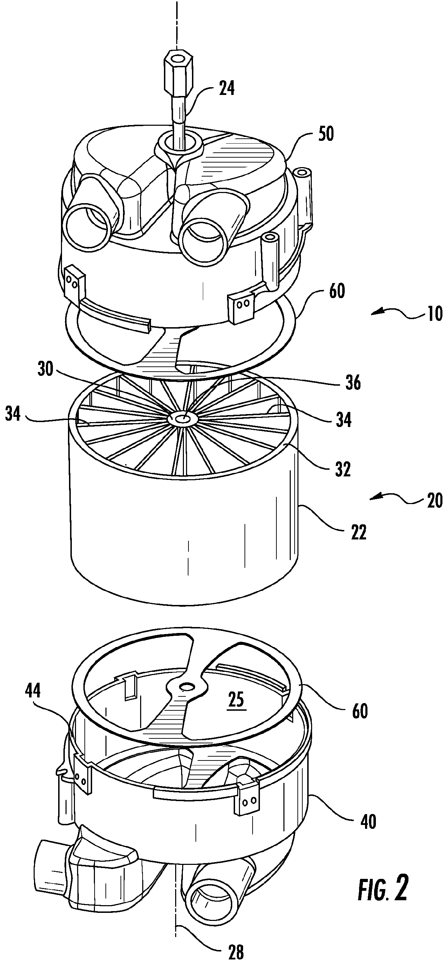

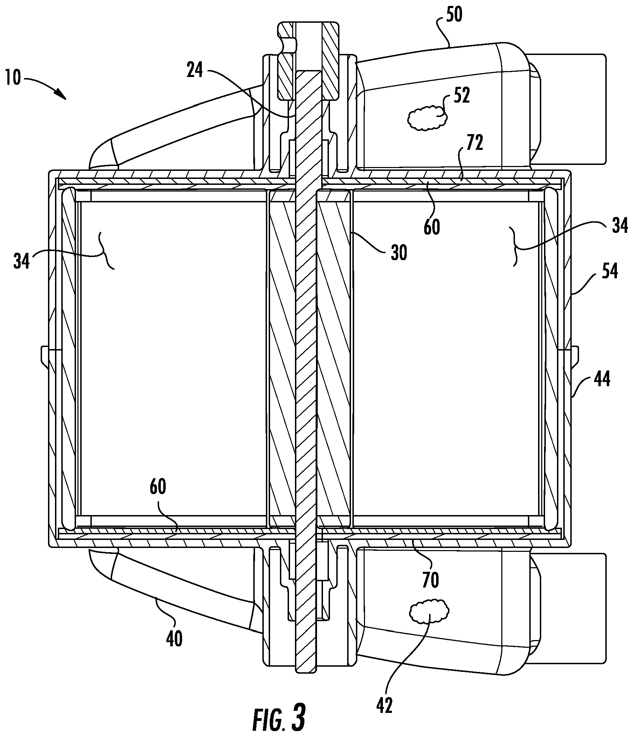

As the flow of gas to be cleaned and the flow of regenerative gas pass through the rotor 22 simultaneously along parallel flow paths, either in concurrent or counter current flows, it is desirable to minimize the leakage of gas to be cleaned into the regenerative gas flow or of regenerative gas into the flow of gas to be cleaned. To so minimize gas leakage, a sealing arrangement is provided at each of the interfaces between the respective end faces of the rotor 22 with the first housing section 40 and the second housing section 50. In the depicted embodiment, at each end of the rotor, the sealing arrangement includes a sealing gasket 60 disposed between the end face of the rotor 22 and an interfacing surface of the respective first and second housing sections 40 and 50, such as illustrated in FIGs. 2 and 3.

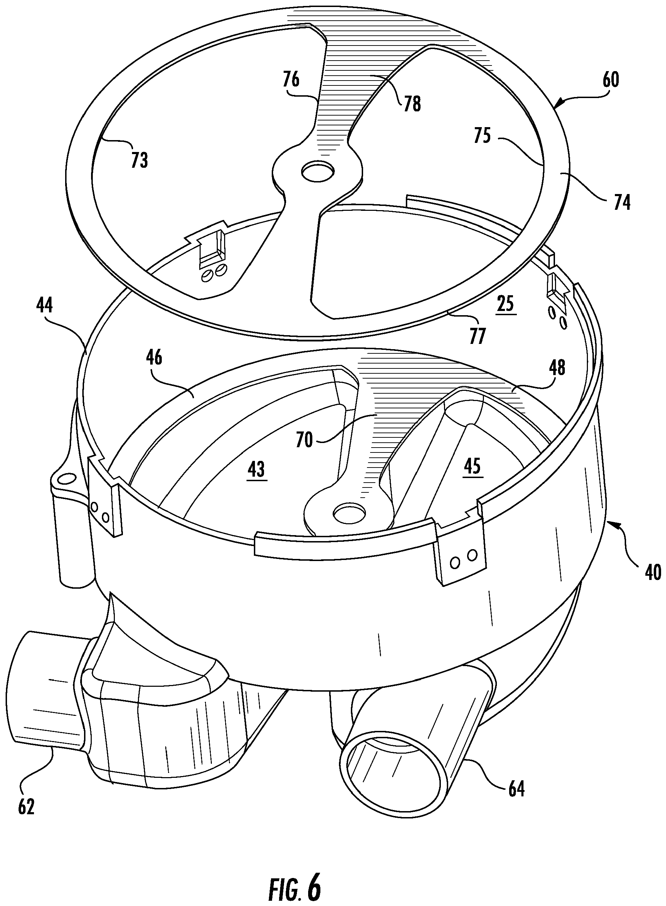

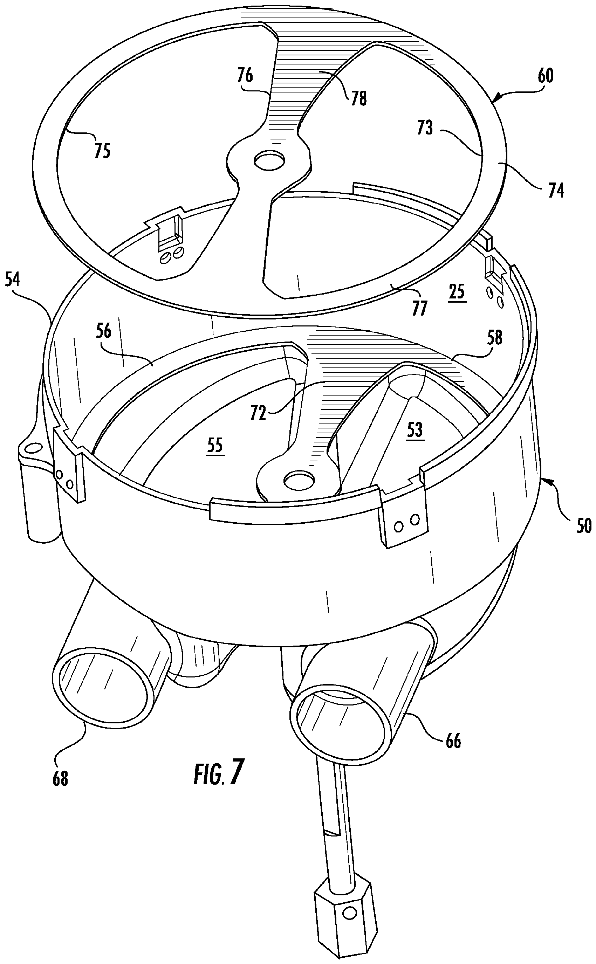

Referring to FIG. 6, the first housing section 40 includes a seal seat 46 that includes an annular rim 48 circumscribing an open area and a diametrically extending central member 70 spanning the open area from one side of the rim to a diametrically opposite side of the rim 48. The diametrically extending central member 70 bisects the open area circumscribed by the rim 48 into a first opening on one side of the central member 70 coincident with the first plenum 43 and a second opening on the opposite side of the central member 70 coincident with the second plenum 45. Referring to FIG. 7, the second housing section 50 includes a seal seat 56 that includes an annular rim 58 circumscribing an open area and a diametrically extending central member 72 spanning the open area from one side of the rim to a diametrically opposite side of the rim 58. The diametrically extending central member 72 bisects the open area circumscribed by the rim 58 into a first opening on one side of the central member 72 coincident with the first plenum 53 and a second opening on the opposite side of the central member 72 coincident with the second plenum 55. Both of the central members 70 and 72 has a central hub portion and a pair of wedge shaped segments extending diametrically therefrom to the rim 48, as best seen in FIGs. 6 and 7.

Each seal gasket 60 has an outer annular ring 74 circumscribing an open area and a diametrically extending member 76 spanning the open area, thereby dividing the open area into a first opening 73 and a second opening 75, as illustrated in FIG. 6 and 7. A sealing gasket 60 is installed in each of the first housing section 40 and the second housing section 50. A first seal gasket 60 is disposed between the gas manifold section 42 of the first housing section 40 and the rotor 22 and a second seal gasket 60 is disposed between the gas manifold section 52 of the second housing section 40 and the rotor 22. The first seal gasket 60 may be generally commensurate in size and shaped to the seal seat 46. The second seal gasket 60 may be generally commensurate in size and shape to the seal seat 56.

As depicted in FIG. 6, the first seal gasket 60 is disposed in the first housing section 40 with a first face 77 thereof seating against the seal seat 46 with member 76 in alignment with the central member 70, with the first opening 73 in alignment with the opening to the first plenum 43 and with the second opening 75 in alignment with the opening to the second plenum 45. As depicted in FIG. 7, the second seal gasket 60 is disposed in the second housing section 50 with a first seal surface 77 thereof sealing against the seal seat 56 with member 76 in alignment with the central member 72, with the first opening 73 in alignment with the opening to the first plenum 53 and with the second opening 75 in alignment with the opening to the second plenum 55. When assembled in the manner as depicted in FIGs. 2 and 3 with the rotor 22 disposed within the chamber 25, one end of the rotor 22 seats against a second face 78 of the first seal gasket 60 and the other end of the rotor 22 seats against a second face 78 of the second seal gasket 60.

Referring now to FIG. 8, seal gasket 60 is formed as a hybrid gasket with the first gasket member 80 formed of a solid neoprene rubber and the second gasket member 82 formed of a sponge-like foam neoprene rubber. The hybrid gasket is installed with the first gasket member 80, i.e. the less elastomeric member, disposed facing the rotor 22 and with the second gasket member 82, i.e. the more elastomeric member, disposed facing the respective housing seal seat 46, 56. The more elastomeric second gasket members 82 compress against the respective seal seat 46, 56 as the rotor 22 passes across the facing surface of the less elastomeric first gasket member 72.

As noted previously, the rotor 22 of the rotary regenerative scrubber 10 carries a regenerative absorbent material capable of absorbing the selected gaseous component or components to be removed from the gas to be cleaned. A regenerative absorbent material is an absorbent material whose absorbent capacity may be restored by desorbing the absorbed gaseous component from the absorbent material. The absorbent material may be in any form and disposed in the rotor in any manner suitable to be carried in the wedge-shaped sectors 38 of the rotor 22.

The rotary regenerative scrubber 10 disclosed herein is suitable for, but limited in application to, use in removing carbon dioxide from a flow of cargo box air drawn from the cargo box of a refrigerated transport container, such as a truck, a trailer, a sea-going container, or an intermodal container. Therefore, as an example, the operation of the rotary regenerative scrubber 10 will be described in application to removing carbon dioxide from air drawn from the cargo box of a container transporting a perishable product that emits carbon dioxide as a respiration by-product. In such application, the absorbent material may comprise any carbon dioxide absorbent material that can be regenerated by contacting fresh air with the carbon dioxide absorbent material to desorbed absorbed carbon dioxide and carry the desorbed carbon dioxide away.

In operation of the rotary regenerative scrubber 10 depicted in FIGs. 1-3 with the rotor 22 carrying a regenerative carbon dioxide absorbent material, carbon dioxide bearing air drawn from the closed environment within a cargo box and passed through the connector 64 into the second plenum 45, from the plenum 45 through the second opening 75 in the first sealing gasket 60, thence through the rotor 22, through the second opening 75 in the second sealing gasket 60 into the second plenum 55 to discharge through the connector 68. Simultaneously, to regenerate the carbon dioxide absorbent material, fresh air is passed through the connector 62 into the first plenum 43, from the first plenum 43 through the first opening 73 in the first sealing gasket 60, thence through the rotor 22, through the first opening 73 in the second sealing gasket 60 into the second plenum 53 to discharge through the connector 66.

As the rotor 22 rotates within the chamber 25, the radially extending partitions 34 that divide the volume of the rotor 22 into the plurality of wedge-shaped sectors 38 pass across the facing surface of each of the first and second sealing gaskets 60 in sealing relationship those facing surfaces. Thus, a sealing arrangement is established at each end of the rotor 22 through the first and second sealing gaskets 60 disposed between the rotor end faces and the central members 70, 72 of the first and second housing sections 40, 50. The sealing arrangement minimizes leakage of gas form one air flow passing through the rotor into the other air flow passing through the rotor. The radially extending partitions 34 may be spaced at circumferential intervals such that each wedge-shaped sector 38 subtends a sector angle that is smaller than the sector angles subtended by the radially extending portions of the seal gaskets 60 disposed against the central members 70, 72 of the first and second housing sections 40, 50, respectively, as illustrated in FIG. 9.

The terminology used herein is for the purpose of description, not limitation. Specific structural and functional details disclosed herein are not to be interpreted as limiting, but merely as basis for teaching one skilled in the art to employ the present invention. Those skilled in the art will also recognize the equivalents that may be substituted for elements described with reference to the exemplary embodiments disclosed herein without departing from the scope of the present invention.

## Claims

1. A sealing arrangement for sealing a gas leakage path between a first gas flow and a second gas flow at an end of a rotating rotor (22) disposed in a stationary housing (26) of a rotary regenerative device (10), the sealing arrangement comprising:
a seal gasket (60) disposed between a seal seat (46, 56) of the housing (26) facing the rotor (22) and the end of the rotor, the seal seat (46, 56) of the housing (26) comprising an annular rim (48, 58) circumscribing an open area and a seal seat plate (70, 72) extending diametrically across the open area between diametrically opposite portions of the annular rim (48, 58), and the seal gasket (60) having an outer annular ring (74) circumscribing an open area and a diametrically extending member (76) spanning the open area,
**characterized in that** the seal gasket (60) is formed as a hybrid gasket comprising a first gasket member (80) and a second gasket (82) member disposed in a back-to-back relationship, wherein the first gasket member (80) faces the rotor (22) and the second gasket member (82) faces the seal seat (46, 56) of the housing (26);
wherein the first gasket member (80) comprises a relatively less elastomeric material as compared to the second gasket member (82), and wherein the first gasket member (80) is formed of solid neoprene rubber and the second gasket member (82) is formed of a sponge-like neoprene rubber.

2. A seal gasket (60) for a sealing arrangement according to claim 1, the seal gasket (60) having an outer annular ring (74) circumscribing an open area and a diametrically extending member (76) spanning the open area, **characterized in that** the seal gasket (60) is formed as a hybrid gasket having a first gasket member (80) and a second gasket member (82) disposed in back-to-back relationship, the first gasket member (80) comprising a relatively less elastomeric material as compared to the second gasket member (82), wherein the first gasket member (80) is formed of solid neoprene rubber and the second gasket member (82) is formed of a sponge-like neoprene rubber.

3. A rotary regenerative scrubber (10) for removing a selected gaseous component from a flow of gas to be cleaned, the scrubber (10) comprising:
a housing (26) defining a first flow passage for a flow of gas to be cleaned and a second flow passage for a flow of regenerating gas;
a rotor assembly (20) disposed in the housing (26) for rotation through the first flow passage and the second flow passage, the rotor assembly (20) carrying a regenerative absorbent material capable of absorbing the selected gaseous component;
a first seal gasket (60) disposed between a first seal seat (46) of the housing (24) facing a first end of the rotor assembly (20) and the first end of the rotor assembly (20); and
a second seal gasket (60) disposed between a second seal seat (56) of the housing (26) facing a second end of the rotor assembly (20) and the second end of the rotor assembly (20),
wherein the first and second seal gaskets (60) each have an outer annular ring (74) circumscribing an open area and a diametrically extending member (76) spanning the open area,
**characterized in that** the first and the second seal gaskets (60) are formed as a hybrid gasket, each comprise a first gasket member (80) and a second gasket member (82) disposed in back-to-back relationship, wherein the first seal gasket (60) is disposed with the first gasket member (80) facing the first end face of the rotor assembly (20) and the second gasket member (60) facing the first seal seat (46), and the second seal gasket (82) is disposed with the first gasket member (80) facing the second end face of the rotor assembly (22) and the second gasket member (82) facing the second seal seat (56), wherein the first gasket member (80) respectively comprises a relatively less elastomeric material as compared to the second gasket member (82), and wherein the first gasket member (80) is formed of solid neoprene rubber and the second gasket member (82) is formed of a sponge-like neoprene rubber.

4. The rotary regenerative scrubber (10) as recited in claim 3 wherein the rotor assembly (20) comprises a rotor (22) mounted to a shaft (24) for rotation with the shaft (24), the rotor (22) having a central hub (30), a circumferential wall (32), and a plurality of radially directed partitions (34) extending from the central hub (30) to the circumferential wall (32).

5. The rotary regenerative scrubber (10) as recited in claim 4 wherein the housing (26) comprises: a first housing section (40) and a second housing section (50), the first housing section (40) defining a defining a first gas manifold section (42) and the second housing section (50) defining a second gas manifold section (52), the first seal seat (46) disposed across the first gas manifold and the second seal seat (56) disposed across the second gas manifold.

## Patentansprüche

1. Dichtungsanordnung zum Abdichten eines Gasaustrittspfads zwischen einem ersten Gasstrom und einem zweiten Gasstrom an einem Ende eines rotierenden Rotors (22), der in einem stationären Gehäuse (26) einer rotierenden regenerativen Vorrichtung (10) angeordnet ist, wobei die Dichtungsanordnung Folgendes umfasst:
eine Dichtung (60), die zwischen einem Dichtungssitz (46, 56) des Gehäuses (26), der zum Rotor (22) hin liegt, und dem Ende des Rotors angeordnet ist, wobei der Dichtungssitz (46, 56) des Gehäuses (26) einen ringförmigen Rand (48, 58) umfasst, der einen offenen Bereich und eine Dichtungssitzplatte (70, 72), die sich diametral über den offenen Bereich zwischen diametral entgegengesetzten Abschnitten des ringförmigen Rands (48, 58) erstreckt, eingrenzt, und die Dichtung (60) einen äußeren ringförmigen Ring (74) aufweist, der einen offenen Bereich und ein sich diametral erstreckendes Element (76), das den offenen Bereich überspannt, eingrenzt,
**dadurch gekennzeichnet, dass** die Dichtung (60) als eine Hybriddichtung gebildet ist, die ein erstes Dichtungselement (80) und ein zweites Dichtungselement (82) umfasst, die in einer Rücken-an-Rücken-Beziehung angeordnet sind, wobei das erste Dichtungselement (80) zum Rotor (22) hin liegt und das zweite Dichtungselement (82) zum Dichtungssitz (46, 56) des Gehäuses (26) hin liegt;
wobei das erste Dichtungselement (80) ein verhältnismäßig weniger elastomeres Material umfasst als das zweite Dichtungselement (82) und wobei das erste Dichtungselement (80) aus festem Neoprengummi gebildet ist und das zweite Dichtungselement (82) aus einem schwammartigen Neoprengummi gebildet ist.

2. Dichtung (60) für eine Dichtungsanordnung nach Anspruch 1, wobei die Dichtung (60) einen äußeren ringförmigen Ring (74) aufweist, der einen offenen Bereich und ein sich diametral erstreckendes Element (76), das den offenen Bereich überspannt, eingrenzt, **dadurch gekennzeichnet, dass** die Dichtung (60) als eine Hybriddichtung gebildet ist, die ein erstes Dichtungselement (80) und ein zweites Dichtungselement (82) aufweist, die in einer Rücken-an-Rücken-Beziehung angeordnet sind, wobei das erste Dichtungselement (80) ein verhältnismäßig weniger elastomeres Material umfasst als das zweite Dichtungselement (82), wobei das erste Dichtungselement (80) aus festem Neoprengummi gebildet ist und das zweite Dichtungselement (82) aus einem schwammartigen Neoprengummi gebildet ist.

3. Rotierender regenerativer Gaswäscher (10) zum Entfernen einer ausgewählten gasförmigen Komponente aus einem zu reinigenden Gasstrom, wobei der Gaswäscher (10) Folgendes umfasst:
ein Gehäuse (26), das einen ersten Strömungskanal für einen zu reinigenden Gasstrom und einen zweiten Strömungskanal für einen Regenerationsgasstrom definiert;
eine Rotorbaugruppe (20), die in dem Gehäuse (26) für eine Rotation durch den ersten Strömungskanal und den zweiten Strömungskanal angeordnet ist, wobei die Rotorbaugruppe (20) ein regeneratives Absorptionsmaterial trägt, das fähig ist, die ausgewählte gasförmige Komponente zu absorbieren;
eine erste Dichtung (60), die zwischen einem ersten Dichtungssitz (46) des Gehäuses (24), der zu einem ersten Ende der Rotorbaugruppe (20) hin liegt, und dem ersten Ende der Rotorbaugruppe (20) angeordnet ist; und
eine zweite Dichtung (60) die zwischen einem zweiten Dichtungssitz (56) des Gehäuses (26), der zu einem zweiten Ende der Rotorbaugruppe (20) hin liegt, und dem zweiten Ende der Rotorbaugruppe (20) angeordnet ist,
wobei die erste und die zweite Dichtung (60) jeweils einen äußeren ringförmigen Ring (74) aufweisen, der einen offenen Bereich und ein sich diametral erstreckendes Element (76), das den offenen Bereich überspannt, eingrenzt,
**dadurch gekennzeichnet, dass** die erste und die zweite Dichtung (60) als eine Hybriddichtung gebildet sind, wobei jede ein erstes Dichtungselement (80) und ein zweites Dichtungselement (82) umfasst, die in einer Rücken-an-Rücken-Beziehung angeordnet sind, wobei die erste Dichtung (60) so angeordnet ist, dass das erste Dichtungselement (80) zur ersten Stirnfläche der Rotorbaugruppe (20) hin liegt und das zweite Dichtungselement (60) zum ersten Dichtungssitz (46) hin liegt, und die zweite Dichtung (82) so angeordnet ist, dass das erste Dichtungselement (80) zur zweiten Stirnfläche der Rotorbaugruppe (22) hin liegt und das zweite Dichtungselement (82) zum zweiten Dichtungssitz (56) hin liegt, wobei das erste Dichtungselement (80) jeweils ein verhältnismäßig weniger elastomeres Material umfasst als das zweite Dichtungselement (82) und wobei das erste Dichtungselement (80) aus festem Neoprengummi gebildet ist und das zweite Dichtungselement (82) aus einem schwammartigen Neoprengummi gebildet ist.

4. Rotierender regenerativer Gaswäscher (10) nach Anspruch 3, wobei die Rotorbaugruppe (20) einen Rotor (22) umfasst, der an einer Welle (24) zur Rotation mit der Welle (24) montiert ist, wobei der Rotor (22) eine zentrale Nabe (30), eine umlaufende Wand (32) und eine Vielzahl von radial gerichteten Trennwänden (34) aufweist, die sich von der zentralen Nabe (30) bis zur umlaufenden Wand (32) erstrecken.

5. Rotierender regenerativer Gaswäscher (10) nach Anspruch 4, wobei das Gehäuse (26) Folgendes umfasst: einen ersten Gehäuseabschnitt (40) und einen zweiten Gehäuseabschnitt (50), wobei der erste Gehäuseabschnitt (40) einen ersten Gasverteilerabschnitt (42) definiert und der zweite Gehäuseabschnitt (50) einen zweiten Gasverteilerabschnitt (52) definiert, wobei der erste Dichtungssitz (46) über den ersten Gasverteiler hinweg angeordnet ist und der zweite Dichtungssitz (56) über den zweiten Gasverteiler hinweg angeordnet ist.

## Revendications

1. Agencement formant une étanchéité pour étanchéifier un chemin de fuite de gaz entre un premier écoulement de gaz et un second écoulement de gaz au niveau d'une extrémité d'un rotor rotatif (22) disposé dans un boîtier fixe (26) d'un dispositif régénératif rotatif (10), l'agencement formant une étanchéité comprenant :
un joint d'étanchéité (60) disposé entre un siège d'étanchéité (46, 56) du boîtier (26) orienté vers le rotor (22) et l'extrémité du rotor, le siège d'étanchéité (46, 56) du boîtier (26) comprenant un rebord annulaire (48, 58) circonscrivant une zone ouverte et une plaque de siège d'étanchéité (70, 72) s'étendant diamétralement à travers la zone ouverte entre des parties diamétralement opposées du rebord annulaire (48, 58) et le joint d'étanchéité (60) ayant une bague annulaire extérieure (74) circonscrivant une zone ouverte et un élément s'étendant diamétralement (76) couvrant la zone ouverte,
**caractérisé en ce que** le joint d'étanchéité (60) est formé en tant que joint hybride comprenant un premier élément de joint (80) et un second élément de joint (82) disposés dans une relation dos à dos, dans lequel le premier élément de joint (80) est orienté vers le rotor (22) et le second élément de joint (82) est orienté vers le siège d'étanchéité (46, 56) du boîtier (26) ;
dans lequel le premier élément de joint (80) comprend un matériau relativement moins élastomère par rapport au second élément de joint (82), et dans lequel le premier élément de joint (80) est constitué d'un caoutchouc en néoprène solide et le second élément de joint (82) est constitué d'un caoutchouc en néoprène spongieux.

2. Joint d'étanchéité (60) pour un agencement formant une étanchéité selon la revendication 1, le joint d'étanchéité (60) ayant une bague annulaire extérieure (74) circonscrivant une zone ouverte et un élément s'étendant diamétralement (76) couvrant la zone ouverte, **caractérisé en ce que** le joint d'étanchéité (60) est formé en tant que joint hybride ayant un premier élément de joint (80) et un second élément de joint (82) disposés dans une relation dos à dos, le premier élément de joint (80) comprenant un matériau relativement moins élastomère par rapport au second élément de joint (82), dans lequel le premier élément de joint (80) est constitué d'un caoutchouc en néoprène solide et le second élément de joint (82) est constitué d'un caoutchouc en néoprène spongieux.

3. Laveur régénératif rotatif (10) pour éliminer un composant gazeux sélectionné d'un écoulement de gaz à nettoyer, le laveur (10) comprenant :
un boîtier (26) définissant un premier passage d'écoulement pour un écoulement de gaz à nettoyer et un second passage d'écoulement pour un écoulement de gaz de régénération ;
un ensemble rotor (20) disposé dans le boîtier (26) pour tourner à travers le premier passage d'écoulement et le second passage d'écoulement, l'ensemble rotor (20) portant un matériau absorbant régénératif capable d'absorber le composant gazeux sélectionné ;
un premier joint d'étanchéité (60) disposé entre un premier siège d'étanchéité (46) du boîtier (24) orienté vers une première extrémité de l'ensemble rotor (20) et la première extrémité de l'ensemble rotor (20) ; et
un second joint d'étanchéité (60) disposé entre un second siège d'étanchéité (56) du boîtier (26) orienté vers une seconde extrémité de l'ensemble rotor (20) et la seconde extrémité de l'ensemble rotor (20),
dans lequel les premier et second joints d'étanchéité (60) comportent chacun une bague annulaire extérieure (74) circonscrivant une zone ouverte et un élément s'étendant diamétralement (76) couvrant la zone ouverte,
**caractérisé en ce que** les premier et second joints d'étanchéité (60) sont formés en tant que joint hybride, chacun comprenant un premier élément de joint (80) et un second élément de joint (82) disposés dans une relation dos à dos, dans lequel le premier joint d'étanchéité (60) est disposé avec le premier élément de joint (80) orienté vers la première face d'extrémité de l'ensemble rotor (20) et le second élément de joint (60) orienté vers le premier siège d'étanchéité (46), et le second joint d'étanchéité (82) est disposé avec le premier élément de joint (80) orienté vers la seconde face d'extrémité de l'ensemble rotor (22) et le second élément de joint (82) orienté vers le second siège d'étanchéité (56), dans lequel le premier élément de joint (80) comprend respectivement un matériau relativement moins élastomère par rapport au second élément de joint (82) et dans lequel le premier élément de joint (80) est constitué d'un caoutchouc en néoprène solide et le second élément de joint (82) est constitué d'un caoutchouc en néoprène spongieux.

4. Laveur régénératif rotatif (10) selon la revendication 3, dans lequel l'ensemble rotor (20) comprend un rotor (22) monté sur un arbre (24) pour tourner avec l'arbre (24), le rotor (22) ayant un moyeu central (30), une paroi circonférentielle (32) et une pluralité de cloisons dirigées radialement (34) s'étendant depuis le moyeu central (30) vers la paroi circonférentielle (32).

5. Laveur régénératif rotatif (10) selon la revendication 4, dans lequel le boîtier (26) comprend : une première section de boîtier (40) et une seconde section de boîtier (50), la première section de boîtier (40) définissant une première section de collecteur de gaz (42) et la seconde section de boîtier (50) définissant une seconde section de collecteur de gaz (52), le premier siège d'étanchéité (46) étant disposé à travers le premier collecteur de gaz et le second siège d'étanchéité (56) étant disposé à travers le second collecteur de gaz.
